# EUROPÄISCHE PATENTSCHRIFT

(11) **EP 0 318 101 B1**
(45) Veröffentlichungstag und Bekanntmachung des Hinweises auf die Patenterteilung: **03.02.1993**
(21) Anmeldenummer: 88202631.3
(22) Anmeldetag: 23.11.1988
(51) Int. Cl.: C01G 23/053

(54) **Verfahren zur Herstellung von Titandioxid-Pulver**
Process for the preparation of titanium dioxide powder
Procédé de préparation de poudre de dioxyde de titane

(30) Priorität: 25.11.1987 DE 3739854
(43) Veröffentlichungstag der Anmeldung: 31.05.1989
(73) Patentinhaber: Philips Patentverwaltung GmbH, 22335 Hamburg (DE); Philips Electronics N.V., 5621 BA Eindhoven (NL)
(72) Erfinder: Klee, Mareike Katharine, D-5142 Hückelhoven/Brachelen (DE); Brand, Hans-Wolfgang, D-5100 Aachen (DE)
(74) Vertreter: Kupfermann, Fritz-Joachim, Dipl.-Ing.

(56) Entgegenhaltungen:
- PATENT ABSTRACTS OF JAPAN Band 9, Nr. 91 (C-277)(1814), 19. April 1985; & JP-A-59 223 231 (TEIKOKU KAKOU K.K.) 15.12.1984
- CHEMICAL ABSTRACTS Band 106, Nr. 12, 23. März 1987, Seite 285, Zusammenfassung Nr. 89091h,Columbus Ohio, USA; S. DOEUFF et al.: "Hydrolysis of titanium alkoxides: modification of the molecular precursor by acetic acid" & J. Non-Cryst. Solids 1987, Band 89, Nr. 1,2, Seiten 106-216

## Beschreibung

Die Erfindung betrifft ein Verfahren zur Herstellung von Titandioxid-Pulver durch Hydrolyse eines Titanalkoholats.

Titandioxid-Pulver sind ein wichtiger Ausgangsstoff zur Erstellung unterschiedlichster elektronischer Bauelemente wie z.B. Vielschichtkondensatoren oder auch nichtlineare Widerstände mit positiver Temperaturcharakteristik. Das Erfordernis der ständig steigenden Verbesserung der elektronischen Bauelemente sowie eine bessere Prozeßbeherrschung bei der Herstellung dieser Bauelemente stellt erhöhte Anforderungen an die Ausgangsstoffe. Die während eines Sinterprozesses gebildete Mikrostruktur von keramischen Körpern wird in hohem Maß durch die Pulvercharakteristika der eingesetzten Ausgangsstoffe (Partikelgröße, Partikelgrößenverteilung, Partikelform, Stöchiometrie, Phasenzusammensetzung) bestimmt. Es werden insbesondere Pulverpartikel definierter Partikelgröße mit runder Partikelform und in enger Partikelgrößenverteilung gefordert. Die Ausgangsstoffe sollen weiterhin eine hohe Reinheit besitzen. Darüberhinaus müssen die zur Herstellung der Ausgangsstoffe eingesetzten Verfahren kostengünstig und präparativ wenig aufwendig sein, wenn eine Großserienfertigung wirtschaftlich arbeiten soll.

Titandioxid-Pulver werden nach unterschiedlichen Verfahren hergestellt, die jedoch hinsichtlich der reproduzierbaren Einstellung einer gewünschten Partikelgröße und Partikelgrößenverteilung der erhaltenen Pulver sowie ihrer Wirtschaftlichkeit nicht optimal sind.

Titandioxid wird großtechnisch durch Aufschluß von Erzen mit Schwefelsäure oder Salzsäure erhalten. Aus den erstellten Titansulfat-Lösungen wird das Titan hydrolytisch als Titandioxid ausgefällt. Im Aufschluß mit Salzsäure wird Titantetrachlorid erhalten, welches entweder in wässeriger Lösung hydrolysiert wird oder in Dampfform mit oxidierenden Gasen zu Titandioxid umgesetzt wird. Die nach diesen Verfahren erhaltenen Titandioxid-Pulver weisen je nach Erstellungsprozeß starke Verunreinigungen durch Fremdionen wie z.B. Fe, Al, Si, Cl usw. auf. Im Schwefelsäure-Prozeß werden sehr grobkörnige, stark aggregierte Pulverpartikel mit unregelmäßiger Partikelform erhalten. Um Pulverpartikel mit einer Partikelgröße von etwa 1 bis 2 µm zu erhalten, sind Mahlprozesse notwendig, die Verunreinigungen in das Pulver einbringen. Im Salzsäure-Prozeß werden feinteilige Titandioxid-Pulverpartikel erhalten, die jedoch stark aggregiert sind.

Es ist auch bekannt, nicht aggregierte Titandioxid-Partikel mit jeweils runder Partikelform herzustellen, die jedoch für bestimmte Anwendungszwecke eine zu geringe Partikelgröße aufweisen.
So ist es aus Comm.Am.Cer.Soc. 1982, Dezember, Seiten C 199 bis C 201 bekannt, Titandioxid-Partikel mit runder Partikelform und hoher Reinheit durch Hydrolyse von Titanalkoholaten mit deionisiertem Wasser herzustellen. Weiter ist es aus J.Coll. and Interf. Sc. 95 (1983), Seiten 228 bis 239 bekannt, Titandioxid-Partikel mit runder Partikelform durch Hydrolyse von Titanalkoholat-aerosolen mit Wasserdampf herzustellen.
Nach beiden bekannten Verfahren werden jedoch nur Pulverpartikel mit einem Partikeldurchmesser im Bereich von 0,1 bis 0,7 µm erhalten.

Aus J.Coll. and Interf.Sc. 61 (1977), Seiten 302 bis 311 ist es bekannt, Titandioxid-Pulver mit runder Partikelform durch Hydrolyse von Titantetrachlorid in Salzsäure bei erhöhten Reaktionstemperaturen (98 °C) in Gegenwart von S0₄²⁻-Anionen zu erzeugen. Die Partikelgröße variiert abhängig von der Reaktionszeit (22 bis 47 Tage) und den Reaktionskonzentrationen in einem Bereich von 0,8 bis 4 µm. Die langen Reaktionszeiten machen diesen Batchprozeß für eine Großserienfertigung sehr kostenaufwendig. Weiterhin ist zu erwarten, daß die Hydrolyse von Titantetrachlorid in Salzsäure in Gegenwart von S0₄²⁻-Anionen ein mit anorganischen Ionen verunreinigtes Titandioxid-Pulver liefert.

Der Erfindung liegt die Aufgabe zugrunde, ein Verfahren der eingangs genannten Art so zu verbessern, daß monodisperse hochreine Titandioxid-Partikel mit runder Partikelform in einer gewünschten Korngröße > 0,7 µm wirtschaftlich in einem Prozeß von relativ kurzer Dauer hergestellt werden können.

Diese Aufgabe wird erfindungsgemäß dadurch gelöst, daß a) das Titanalkoholat mit einer 10 M essigsauren wässerigen Lösung und einer wässerigen Ethanol-Lösung unter N₂-Atmosphäre zur Reaktion gebracht wird, b) das aus Titandioxid-Partikeln bestehende Präzipitat nach einer Reaktionszeit von 24 h von der flüssigen Phase getrennt wird, c) das Präzipitat mit deionisiertem Wasser und anschließend mit einer wässerigen ammoniakalischen Lösung mit einem pH-Wert von 9 gewaschen wird und d) die Phasen getrennt werden.

Nach einer vorteilhaften Weiterbildung des erfindungsgemäßen Verfahrens wird innerhalb eines Zeitraumes von 3 Tagen aus der gemäß Prozeßschritt b) erhaltenen flüssigen Phase über eine Nachfällung gebildetes Titandioxid von der flüssigen Phase getrennt und gemäß den Prozeßschritten c) und d) weiterbehandelt.

Als Titanalkoholat wird vorteilhafterweise in Ethanol gelöstes Titan-tetra-ethoxid eingesetzt.

Mit dem Verfahren gemäß der vorliegenden Erfindung sind insbesondere folgende Vorteile verbunden:
Durch den Einsatz von Titanalkoholaten, organischen Lösungsmitteln, einer organischen Säure und deionisiertem Wasser werden hochreine Pulver, also nicht durch anorganische Kationen oder Anionen verunreinigte Pulver erhalten. Durch den Einsatz von organischen Säuren ist es möglich, die Keimbildung und das Wachstum der Partikel bei der Hydrolyse von Titanalkoholaten so zu beeinflussen, daß Titandioxid-Partikel mit runder Partikelform und einem Partikeldurchmesser im Bereich von 0,7 bis 2,6 µm gebildet werden. Die auf diese Weise erhaltenen Partikel lassen sich mit herkömmlichen Trennverfahren wie z.B. Filtrieren, Zentrifugieren, Sedimentation in Fraktionen mit unterschiedlichen Partikeldurchmessern aufteilen.
Ein besonderer Vorteil des vorliegenden Verfahrens ist, daß Titandioxid-Partikel mit runder Partikelform und einem Partikeldurchmesser im Bereich von 1,5 bis 2,2 µm nach einer Reaktionszeit von nur einem Tag erhalten werden.
Ein weiterer Vorteil des vorliegenden Verfahrens ist, daß in einer Nachfällung nach einer Reaktionszeit von 3 Tagen Titandioxid-Partikel mit runder Partikelform und einem Partikeldurchmesser im Bereich von 0,7 bis 2,6 µm dargestellt werden können. Die durch diese Nachfällung erzeugten Partikel lassen sich ebenfalls in Fraktionen mit unterschiedlichen Partikeldurchmessern aufteilen.

Anhand eines Ausführungsbeispiels wird die Erfindung beschrieben und in ihrer Wirkungsweise erläutert.

2,07 ml Titan-tetra-ethoxid werden in 48 ml Ethanol (vergällt) unter einer Inertgasatmosphäre gelöst. Der zu verwendende absolute Alkohol wird über Mg-Spänen getrocknet und anschließend destilliert. Zu der 0,2 M Titan-tetraethoxid/Ethanol-Lösung werden unter kräftigem Rühren 0,1 ml einer 10 M essigsauren, wässerigen Lösung pipettiert. Es wird eine wässerige Ethanol-Lösung hergestellt, wozu 0,54 g deionisiertes Wasser in 49,46 ml absolutem Ethanol gelöst werden; diese Lösung wird mit der Titanalkoholat-Lösung vermischt, wobei die Zugabe der wässerigen Ethanol-Lösung über einen Tropftrichter innerhalb einer Dauer von 10 s unter N₂-Atmosphäre und unter intensivem Rühren der Lösung erfolgt. Vorteilhafterweise kann ein Magnetrührer eingesetzt werden. Nach einer Dauer von 10 s intensiver Vermischung der beiden Lösungen wird das Rührwerk abgeschaltet. Das über eine Dauer von 24 h in der Lösung gebildete Präzipitat aus Titandioxid-Partikeln wird mittels eines Filters aus Celluloseacetat einer Porengröße von 0,2 µm abfiltriert. Zur vollständigen Hydrolyse von Titanalkoholaten auf der Pulveroberfläche wird das Präzipitat in 50 ml deionisiertem Wasser 10 min dispergiert und anschließend abzentrifugiert; dieser Waschvorgang wird dreimal wiederholt. Anschließend wird das erhaltene Titandioxid-Pulver in einer ammoniakalischen wässerigen Lösung mit einem pH-Wert von 9 dispergiert.

Mittels rastermikroskopischer Aufnahmen wurde nachgewiesen, daß runde Partikel mit einer Partikelgröße im Bereich von 1,5 bis 2,2 µm erhalten werden.

Mittels Röntgenbeugungsuntersuchungen wurde nachgewiesen, daß das Pulver röntgenamorph ist.

In dem Filtrat, aus dem das gebildete Titandioxid-Präzipitat abfiltriert wurde, findet eine Nachfällung von Titandioxid-Partikeln statt. Das Präzipitat wird nach 3 Tagen über ein Celluloseacetatfilter einer Porengröße von 0,2 µm abfiltriert, wie oben beschrieben viermal mit deionisiertem Wasser gewaschen und anschließend in einer ammoniakalischen wässerigen Lösung mit einem pH-Wert von 9 dispergiert. Die Trennung der flüssigen von der festen Phase kann über einen Zentrifugierprozeß erfolgen.
Mittels rastermikroskopischer Aufnahmen wurde nachgewiesen, daß über diese Nachfällung Titandioxid-Partikel einer Partikelgröße im Bereich von 0,7 bis 2,6 µm erhalten werden.

## Patentansprüche

1. Verfahren zur Herstellung von Titandioxid-Pulver durch Hydrolyse eines Titanalkoholats,
dadurch gekennzeichnet,
daß
a) das Titanalkoholat mit einer 10 M essigsauren wässerigen Lösung und einer wässerigen Ethanol-Lösung unter N₂-Atmosphäre zur Reaktion gebracht wird,
b) das aus Titandioxid-Partikeln bestehende Präzipitat nach einer Reaktionszeit von 24 h von der flüssigen Phase getrennt wird,
c) das Präzipitat mit deionisiertem Wasser und anschließend mit einer wässerigen ammoniakalischen Lösung mit einem pH-Wert von 9 gewaschen wird und
d) die Phasen getrennt werden.

2. Verfahren nach Anspruch 1,
dadurch gekennzeichnet,
daß innerhalb eines Zeitraumes von 3 Tagen aus der gemäß Prozeßschritt b) erhaltenen flüssigen Phase über eine Nachfällung gebildetes Titandioxid von der flüssigen Phase getrennt und gemäß den Prozeßschritten c) und d) weiterbehandelt wird.

3. Verfahren nach Anspruch 1 oder 2,
dadurch gekennzeichnet,
daß als Titanalkoholat in Ethanol gelöstes Titan-tetraethoxid eingesetzt wird.

## Claims

1. A method of manufacturing titanium dioxide powder by means of hydrolysis of a titanium alcoholate, characterized in that
a) the titanium alcoholate is made to react with a 10 M acetic acid aqueous solution and an aqueous ethanol solution under an N₂ atmosphere,
b) the precipitate consisting of titanium dioxide particles is separated from the liquid phase after a reaction time of 24 hours,
c) the precipitate is washed with deionized water and subsequently with an aqueous ammoniacal solution having a pH value of 9, and
d) the solid and liquid phases are separated.

2. A method as claimed in Claim 1, characterized in that, titanium dioxide formed by a postprecipitation from the liquid phase obtained in accordance with process step b) is separated from the liquid phase and subsequently treated in accordance with the process steps c) and d), within a period of 3 days.

3. A method as claimed in Claim 1 or 2, characterized in that titanium-tetraethoxide which is dissolved in ethanol is used as titanium alcoholate.

## Revendications

1. Procédé pour la préparation de poudre en dioxyde de titane par hydrolyse d'un alcoolat de titane, caractérisé en ce que
a) l'alcoolat de titane est porté en réaction avec une solution aqueuse d'acide acétique 10 M et une solution d'éthanol aqueuse dans une atmosphère de N₂,
b) le précipité constitué de particules en dioxyde de titane est séparé de la phase liquide après un temps de réaction de 24 heures,
c) le précipité est lavé à l'eau désïonisée et, ensuite, avec une solution ammoniacale aqueuse présentant un pH de 9 et
d) les phases sont séparées.

2. Procédé selon la revendication, caractérisé en ce que du dioxyde de titane obtenu en un laps de temps de trois jours à partir de la phase liquide selon l'étape de processus b) est séparé de la phase liquide pour être traité, ensuite, selon les étapes de processus c) et d).

3. Procédé selon la revendication 1 ou 2, caractérisé en ce que l'on utilise comme alcoolat de titane du tétraéthoxyde de titane dissous dans de l'éthanol.
